# EUROPEAN PATENT APPLICATION

(11) **EP 0 719 834 A2**
(43) Date of publication of application: **03.07.1996**
(21) Application number: 95308907.5
(22) Date of filing: 07.12.1995
(51) Int. Cl.: C08L 71/12, C08L 77/00

(54) **Heat resistant compositions comprising high glass transition temperature polyphenylene ether homopolymers**

(30) Priority: 30.12.1994 US 366694
(71) Applicant: GENERAL ELECTRIC COMPANY, Schenectady, NY 12345 (US)
(72) Inventor: Campbell, John Robert, Clifton Park, New York 12065 (US); Wroczynski, Ronald James, Schenectady, New York 12303 (US); Scobbo, James Joseph, Jr., Guilderland, New York 12084 (US)
(74) Representative: Szary, Anne Catherine

(57) **Abstract**

Heat resistant composition comprising polymer systems and high glass transition temperature polyphenylene ether homopolymers. The heat resistant compositions unexpectedly exhibit improved heat deflection temperatures and retain high impact strengths.

## Description

### Field of the Invention

This invention relates to new compositions of matter and more particularly to heat resistant compositions comprising high glass transition temperature polyphenylene ether homopolymers incorporated therein. The resulting heat resistant compositions unexpectedly exhibit improved heat deflection temperatures (HDT) while retaining, among other things, solvent resistant properties and high impact strengths.

### Background of the Invention

Polyethers and/or polymer blends which contain polyphenylene ethers (PPE) constitute an invaluable class of engineering thermoplastic resins. Resins of polyphenylene ethers are characterized by a unique combination of chemical, physical and electrical properties. For instance, they are resistant to many solvents and generally display high impact strengths. As a result of this unique combination of properties, resins of polyphenylene ethers are suitable for a broad range of commercial applications.

It has been of increasing interest to prepare polymer blends which, while retaining their characteristic hydrolytic stability, dimensional stability and dielectric properties, have higher heat deflection temperatures. Particularly, there is a demand for immiscible blends, like PPE/polyamide blends, which possess increased heat deflection properties since they are, for instance, conventionally used in parts exposed to high temperatures in the automotive industry.

The instant invention, therefore, is directed to novel heat resistant compositions comprising high glass transition temperature polyphenylene ether based homopolymers and the novel blends unexpectedly display improved heat deflection temperatures.

### Description of the Prior Art

Efforts have been disclosed for preparing polyphenylene ether compositions. In U.S. Patents 4,011,200, 4,654,405, 4,798,865 and 4,923,924, polyphenylene ether resin compositions are described and the resins contain copolymers of 2,6-dimethylphenol and 2,3,6-trimethylphenol.

Still other investigators have focused their attention on polyphenylene ether compositions. In U.S. Patent 4,826,933, polyphenylene ether blends are described which contain compatibilizing agents.

The instant invention is patentably distinguishable from the above-described, since among other reasons, it is directed to heat resistant compositions comprising high glass transition temperature polyphenylene ether homopolymers incorporated therein.

### Summary of the Invention

The novel heat resistant compositions in this invention comprise:
(a) high glass transition temperature homopolymers having a plurality of structural units of the formula: 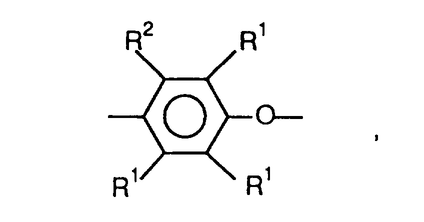 wherein each R¹ is independently a halogen, primary, secondary or tertiary alkyl, phenyl, haloalkyl, aminoalkyl, hydrocarbonoxy or halohydrocarbonoxy wherein at least 2 carbon atoms separate the halogen and oxygen atoms. Often, R¹ is an alkyl group and preferably a methyl group. R² is a hydrogen, halogen, primary, secondary or tertiary alkyl, phenyl, haloalkyl, hydrocarbonoxy or halohydrocarbonoxy as defined for R¹; and
(b) a polymer system selected from the group consisting of immiscible polymer blends, miscible polymer blends and copolymers.

### Detailed Description of the Preferred Embodiments

The high glass transition temperature homopolymers employed in this invention are typically prepared by the oxidative coupling of a monohydroxyaromatic compound such as 2,3,6-trimethylphenol. Catalyst systems are generally employed in the production of the homopolymers and there is essentially no limitation with respect to the catalyst system employed. In fact, any conventional oxidative coupling catalyst known in the art may be employed and they often include those having a metal and amine portions. Illustrative examples of such catalysts include those containing a copper compound and described in U.S. Patents 3,306,874, 3,306,875, 3,914,266 and 4,028,341, the disclosures of which are incorporated herein by reference. These catalyst containing copper compounds are usually combinations of cuprous or cupric ions, halide and at least one amine. Often preferred copper containing catalysts include CuBr/dibutylamine, CuBr/N,N'-di-tert-butyl-1,2-ethylenediamine and CuBr/N,N-dimethylbutylamine as well as mixtures prepared therefrom.

Additional catalyst systems that may be employed in this invention include those containing manganese compounds. They are generally alkaline systems in which divalent manganese is combined with such anions as halide, alkoxide or phenoxide. Most often, the manganese is present as a complex with one or more complexing and/or chelating agents such as dialkylamines, alkanolamines, alkenediamines, o-hydroxyaromatic aldehydes, o-hydroxyazo compounds and ω-hydroxyoximes.

Detailed descriptions for the production of polyphenylene ethers are set forth in U.S. Patents 3,306,874; 3,306,875; 3,257,357; 3,257,358; 3,337,501 and 3,787,361, the disclosures of which are all incorporated herein by reference.

There is no limitation with respect to the immiscible polymer blends, miscible polymer blends or copolymers (hereinafter all referred to as polymer systems) employed in this instant invention other than that they are able to form heat resistant compositions with the high glass transition temperature polyphenylene ether homopolymers described above. Illustrative examples of the polymer systems that may be employed in this invention include any of those, for instance, which comprise polyphenylene ethers in combination with polyolefins, polyamides, polyphenylene sulfide, polyesters, acrylonitriie butadiene styrene, polystyrene or polyetherimides.

It is noted herein that any of the polymers employed in this invention, which are used to form the immiscible blends, miscible blends or copolymers, may be unfunctionalized or functionalized in the typical ways known in the art. Such functionalization can employ, for instance, citric acid, maleic anhydride, fumaric acid, epoxides including epoxy triazenes, trimellitic acid chloride anhydride and the like.

The polyphenylene ether portion of the polymer systems that may be employed in this invention often include both homopolymer and copolymer polyphenylene ethers. Suitable homopolymers are those which contain, for example, 2,6-dimethyl-1,4-phenylene ether units. Suitable copolymers include, for instance, graft, block or random copolymers containing such units in combination with 2,3,6-trimethyl-1,4-phenylene ether units. Such a portion is typically prepared by oxidative coupling at least one corresponding monohydroxyaromatic compound. Moreover, any of the conventional polyphenylene impact modifiers may be employed in this invention. They include, for example, AB (diblock) and ABA (triblock) copolymers and core-shell graft copolymers of alkenylaromatic and diene compounds, especially those comprising styrene and butadiene or isoprene blocks.

It is often preferred that the above-described polyphenylene ether portion of the polymer systems is combined with a base polymer chain consisting essentially of structural units derived from olefinically unsaturated monomers including ethylene, propylene, isobutene, styrene, butadiene, isoprene, chloroprene, vinylchloride, vinylidiene chloride or combinations thereof.

The polymer systems comprising polyphenylene ethers and polyolefins may be prepared, for instance, by first reacting functionalized polyphenylene ether and polyolefins to form polyphenylene ether-polyolefin copolymers which in turn are useful as compatibilizers for polymer blends of the same. A more detailed description of such may be found in Re 34,799, the disclosure of which is incorporated herein by reference.

Other preferred polymer systems that may be employed in this invention include those comprising polyphenylene ethers and polyamides. They may be produced by any conventional method satisfactorily employed in the art. Generally, however, melt blending methods are desired. A more detailed and typical description of the production of polyphenylene ether/polyamide polymer systems that may be employed in this invention is described in U.S. Patent 4,826,933, the disclosure of which is incorporated herein by reference. Additionally, it is noted herein that polyamides are intended to include toughened or super tough polyamides such as those prepared in accordance with, for instance, U.S. Patents 4,174,358, 4,474,927, 4,346,194 and 4,251,644, herein incorporated by reference. Typical polyamides employed include polyamides 4/6, 6, 6/6, 11, 12, 6/3, 6/4, 6/10, 6/12 and nylon compounds comprising aromtic groups derived from terephthalates and isophthalates.

Still other preferred polymer systems which may be employed in this invention include those comprising polyphenylene ether and polyesters. Such polymer systems are typically prepared by melt blending polyphenylene ethers with polyesters such as poly(ethylene terephthalate), poly(butylene terephthalate), liquid crystalline polyesters, poly(butylene naphthalenedicarboxylate) and poly(ethylene naphthalenedicarboxylate). A typical process for such is described in detail in U.S. Patent 5,281,667, the disclosure of which is incorporated herein by reference.

Additional preferred polymer systems which may be employed in this invention include those which comprise polyphenylene ethers and polyarylene sulfides such as polyphenylene sulfide. Such polymer systems are prepared, for instance, by the reaction of epoxy functionalized polyphenylene ether compositions with polyphenylene sulfide containing epoxide-reactive functional groups. A detailed description of such preparation may be found in U.S. Patent 5,122,578, the disclosure of which is incorporated herein by reference.

The homopolymers employed in heat resistant compositions of this invention typically have an average molecular weight (Mw) of about 500 to about 20,000 including all ranges subsumed therein. The preferred range is from about 1,000 to about 10,000 and the most preferred range is from about 2,000 to about 8,000.

Additionally, the instant heat resistant compositions are often about 5 to about 75 weight percent high glass transition temperature homopolymer (as represented by (a)) and preferably about 15 to about 50 weight percent high glass transition temperature homopolymer and most preferably from about 10 to about 35 weight percent high glass transition temperature homopolymer based on total weight of the immiscible blend composition.

High glass transition temperature is defined herein to mean a glass transition temperature from about 170°C to about 265°C and preferably a temperature greater than about 210°C.

It is also noted herein that mixtures of homopolymers having glass transition temperatures from about 170°C to about 265°C may also be employed in this invention.

Unexpected improved heat deflection temperatures are defined herein to mean an increase in HDT of the composition of at least about 5°C and preferably at least about 10°C when compared to the base immiscible polymer blends, miscible polymer blend or copolymers free of said high glass transition temperature homopolymers.

Moreover, the heat resistant compositions described in this invention may be prepared, for instance, by extruding the high glass transition temperature homopolymers and one of the polymer systems described above in, for instance, a twin screw extruder operating at barrel temperatures from about 145°C to about 300°C.

The following examples are provided in order to further illustrate and facilitate the understanding of the instant invention. All products may be confirmed via conventional techniques including proton and carbon-13 nuclear magnetic resonance spectroscopy, infrared spectroscopy and GLC analysis.

### Example 1

A 5-liter flask equipped with condenser, nitrogen tee, thermometer, stirrer, oxygen dip tube and addition funnel was charged with 2.0 L toluene, a 2,3,6-trimethylphenol solution made from 200 mL toluene and 100 g of 2,3,6-trimethylphenol, methyltrialkyl (C₈₋₁₀) ammonium chloride (10% solution in toluene w/v 5.25 ml), tetraethylene diamine (4.4 g), dimethylbutylamine (56.0 g) and a solution of cuprous oxide in hydrobromic acid (19% w/v, 10.6 mL). Oxygen was passed through the vigorously stirred reaction at approximately 3 standard cubic foot per hour while the remainder of monomer solution (total 2,3,6-trimethylphenol - 600 g in 1.2 L toluene) was added in 30 minutes while maintaining the temperature at 25°C with ice cooling. The polymerization temperature was allowed to increase to 40-45°C and the reaction continued for an additional 25 minutes when an additional 50% aliquot of original catalyst charge was added. After an additional 60 minutes at 40-45°C, the reaction was quenched by adding acetic acid (21 mL). High glass transition temperature homopolymer was isolated via reverse precipitation with acetone and filtered. Subsequent to washing and reslurrying with methanol, the polymer was vacuum dried at 70°C to yield 570 g of 2,3,6-trimethylphenol homopolymer powder. GPC measurements indicated Mw and Mn values relative to polystyrene standards of 7,500 and 5,000 respectively.

### Example 2

Example 2 was prepared in a manner similar to the one described in Example 1 except that di-t-butylethylene diamine and dimethylbutyl amine were employed in lieu of tetraethylene diamine and dimethylbutyl amine. Homopolymer yield was essentially the same.

### Example 3

A heat resistant composition was prepared by mixing dry blends of polyphenylene ether (245 g) (prepared from 2,6-xylenol monomer), Kg 1651 Rubber (styrene-ethylene, butylene-styrene triblock copolymers as defined by Shell Corp.) (100 g) and maleic anhydride (10 g) as well as high glass transition temperature homopolymer as prepared in Example 1 (245 g). The resulting mixture was extruded on a twin screw extruder operating at barrel set temperatures of 293°C (die), 293°C, 293°C, 260°C, 232°C and 149°C with a screw speed of 400 rpm. The dry blends were fed at a rate of approximately 50 g/m and subsequently reformulated with polyamide 6/6 (0.695 g/g of extrudate). Extrusion of the mixture resulted in a heat resistant composition.

The data in the table below is provided to demonstrate the unexpected superior properties obtained in the instant invention. All entries have been prepared in a manner similar to those described in the examples provided above.

**TABLE**

| Entry | Polymer System^{a} | Homopolymer^{b} | N.Izod^{c} | HDT^{d} |
|---|---|---|---|---|
| 1 | PPE/PA | 0 | 43.5 | -- |
| 2 | PPE/PA | 12.25 | 27.2 | 6 |
| 3 | PPE/PA | 24.5 | 9.8 | 13 |

| | | | | |
|---|---|---|---|---|
| ^{a}Polyphenylene ether/polyamide | | | | |
| ^{b}Weight percent homopolymer based on total weight of the heat resistant composition | | | | |
| ^{c}Kg-cm/cm. | | | | |
| ^{d}Increase in heat deflection temperature (°C). | | | | |

## Claims

1. A heat resistant composition comprising
(a) high glass transition temperature homopolymers having a plurality of structural units of the formula: 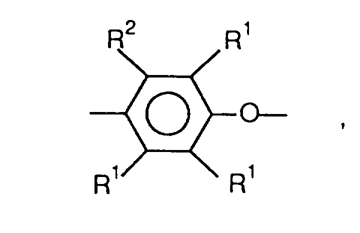 wherein each R¹ is independently a halogen, primary, secondary or tertiary alkyl, phenyl, haloalkyl, aminoalkyl, hydrocarbonoxy or halohydrocarbonoxy wherein at least 2 carbon atoms separate the halogen and oxygen atoms, and R² is a hydrogen, halogen, primary, secondary or tertiary alkyl, phenyl, haloalkyl, hydrocarbonoxy or halohydrocarbonoxy as defined for R¹; and
(b) a polymer system selected from the group consisting of immiscible polymer blends, miscible polymer blends or copolymers.

2. A heat resistant composition in accordance with claim 1 wherein R¹ is an alkyl group and R² is hydrogen.

3. A heat resistant composition in accordance with claim 1 wherein said polymer system comprises polyphenylene ether and polyolefin, polyesters, polyamide or polyarylene sulfide.

4. A heat resistant composition in accordance with claim 3 wherein said polyolefin is derived from ethylene, propylene, isobutene, styrene, butadiene, isoprene, chloroprene, vinylchloride, vinyldiene chloride or combinations thereof.

5. A heat resistant composition in accordance with claim 3 wherein said polyesters are poly(ethylene terephthalates) or poly(butylene terephthalates).

6. A heat resistant composition in accordance with claim 3 wherein said polyamide is Nylon 6/6.

7. A heat resistant composition in accordance with claim 3 wherein said polyamide is a Nylon compound comprising aromatic groups derived from terephthalates and isophthalates.

8. A heat resistant composition in accordance with claim 1 wherein said high glass transition temperature homopolymers have a glass transition temperature of greater than about 110°C.

9. A heat resistant composition in accordance with claim 1 wherein said high glass transition temperature homopolymers have an average molecular weight of about 500 to about 20,000.

10. A heat resistant composition in accordance with claim 1 wherein said heat resistant composition is about 5 to about 75 weight percent high glass transition temperature homopolymer based on total weight of the heat resistant composition.
